Europäisches Patentamt

European Patent Office

Office européen des brevets

(11) Veröffentlichungsnummer: **0 187 134**
A2

# EUROPÄISCHE PATENTANMELDUNG

(21) Anmeldenummer: 85890273.7

(22) Anmeldetag: 04.11.85

(51) Int. Cl.⁴: **F 16 C 17/24**, F 16 C 33/10

(30) Priorität: 21.12.84 AT 4078/84

(43) Veröffentlichungstag der Anmeldung: 09.07.86
Patentblatt 86/28

(84) Benannte Vertragsstaaten: AT BE DE FR GB IT

(71) Anmelder: VOEST-ALPINE Aktiengesellschaft, Muldenstrasse 5, A-4020 Linz (AT)

(72) Erfinder: Steinbrucker, Gerhard, Dipl.-Ing., Bessemerstrasse 30, A-8740 Zeltweg (AT)
Erfinder: Schellenberg, Eduard, Dipl.-Ing., Liebermannweg 32, A-4020 Linz (AT)
Erfinder: Zauner, Friedrich, Dipl.-Ing., Kärntnerstrasse 43, A-8700 Leoben (AT)

(74) Vertreter: Matschnig, Franz, Dipl.-Ing., Siebensterngasse 54 Postfach 452, A-1071 Wien (AT)

(54) Anordnung zur Überwachung des Schmierzustandes eines Gleitlagers.

(57) Bei einer Anordnung zur Überwachung des Schmierzustandes eines Gleitlagers mit zwei relativ zueinander bewegten Lagerteilen (1, 2; 18, 19) ist in dem zu schmierenden Bereich des Lagers einem Lagerteil (2; 19) ein Messstück (5; 22; 26) zugeordnet, das z. B. mittels einer Feder (8) mit einer vorbestimmten Kraft gegen die Lagerfläche (4, 24) des anderen Lagerteiles (1; 19) gedrückt ist, wobei zur Erfassung der auf das Messstück (5; 22; 26) in Bewegungsrichtung der Lagerteile ausgeübten Kraft ein Kraftsensor (10), z. B. ein Dehnmessstreifen, mit dem Messstück (5; 22; 26) verbunden ist.

0187134

P 5228 eu

Anordnung zur Überwachung des Schmierzustandes eines Gleitlagers

Die Erfindung bezieht sich auf eine Anordnung zur Überwachung des Schmierzustandes eines Gleitlagers mit zwei relativ zueinander bewegbaren Lagerteilen, die einander zugewandte Lagerflächen aufweisen.

Gleitlager sind in verschiedenen Ausführungen bekannt. So kann ein sich drehender Zapfen in feststehenden, in einem Gehäuse eingebauten Lagerschalen gleiten. Bei Bergbaumaschinen und dgl. werden oft Scheibengleitlager verwendet, bei welchen eine drehbare, kreisförmige Scheibe auf einer feststehenden, gleichartigen Scheibe abgestützt ist. Auch gibt es lineare Gleitlager, etwa Führungen bei Werkzeugmaschinen oder bei der Führung einer Aufzugkabine an Schienen. Diese Gleitlager werden auf verschiedene Weise geschmiert, um einen Lagerverschleiß nach Möglichkeit zu verringern und den Reibwert so gering wie möglich zu halten. Wird das Schmiermittel nicht in genügender Menge bzw. in gleichmäßigen Abständen zugeführt, kann es zu hohem Lagerverschleiß oder zu einem Festfressen des Lagers kommen.

Ziel der Erfindung ist es, den Schmierzustand des Lagers zu überwachen, sodaß bei Vergrößerung des Reibwertes Schmiermittel zugeführt, ein Alarmsignal gegeben oder eine Notabstellung der Maschine durchgeführt werden kann.

Dieses Ziel läßt sich mit einer Anordnung der eingangs genannten Art erreichen, bei welcher erfindungsgemäß in dem zu schmierenden Bereich des Lagers einem Lagerteil ein Meßstück zugeordnet ist, das, z.B. mittels einer Feder, mit einer vorbestimmten Kraft gegen die Lagerfläche des anderen Lagerteils gedrückt ist und zur Erfassung der auf das Meßstück in Bewegungsrichtung der Lagerteile ausgeübten Kraft ein Kraftsensor, z.B. ein Dehnungsmeßstreifen, mit dem Meßstück verbunden ist.

Das Ausgangssignal des Kraftsensors gibt ständig Auskunft über den Reibwert zwischen der gegen die Lagerfläche gedrückten Stirnfläche des Meßstückes und der Lagerfläche und damit auch über den Schmierzustand des Lagers.

Es ist zweckmäßig, wenn die gegen die Lagerfläche gedrückte Stirnfläche des Meßstückes aus dem gleichen Material besteht, wie die Lagerfläche jenes Lagerteiles, dem das Meßstück zugeordnet ist, da in diesem Fall zwischen der Stirnfläche des Meßstückes und der gegenüberliegenden Lagerfläche im wesentlichen die gleichen Bedingungen vorliegen, wie zwischen den beiden Lagerflächen.

Eine einfache und zuverlässig realisierbare Anpreßkraft des Meßstückes ergibt sich für ein Gleitlager, bei welchem zumindest jene Lagerfläche, gegen die das Meßstück gedrückt wird, aus ferromagnetischem Material besteht, falls das Meßstück permanent magnetisiert oder mit einem Magneten versehen ist, wobei es zufolge der magnetischen Anziehungskraft gegen die Lagerfläche gedrückt ist.

In jenen Fällen, in denen eine Information über das Überschreiten eines maximal zulässigen Reibwertes ausreichend ist, kann der Kraftsensor einen mit einer Feder belasteten elektrischen Kontakt aufweisen, der bei einer bestimmten, auf das Meßstück in Bewegungsrichtung der Lagerteile
ausgeübte Kraft öffnet bzw. schließt.

Falls die Andruckkraft des Meßstückes zeitlich nicht
konstant bleibt, kann es empfehlenswert sein, wenn zur
Erfassung der vorbestimmten Kraft, z.B. der Federkraft,
ein zweiter Kraftsensor mit dem Meßstück verbunden ist.

In diesem Fall ist zweckmäßigerweise zur Ermittlung
des Quotienten F/N eine Rechenschaltung vorgesehen, deren
beiden Eingänge mit den Ausgängen der beiden Kraftsensoren
verbunden sind.

Auf einfache Weise erhält man eine reibwertabhängige
Schmierung des Lagers, wenn in eine Schmiermittelzuleitung
für das Lager ein von dem Signal des Sensors oder von den
in der Rechenschaltung verarbeiteten Signalen der Sensoren
gesteuertes Magnetventil od. dgl. geschaltet ist.

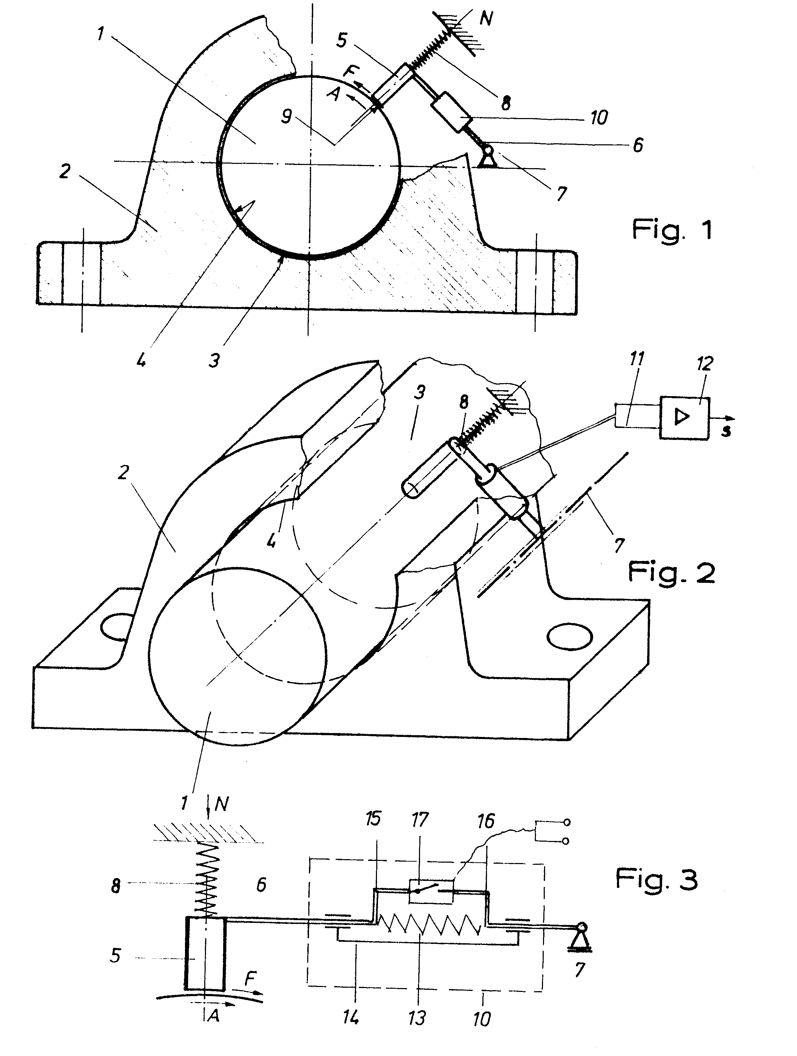

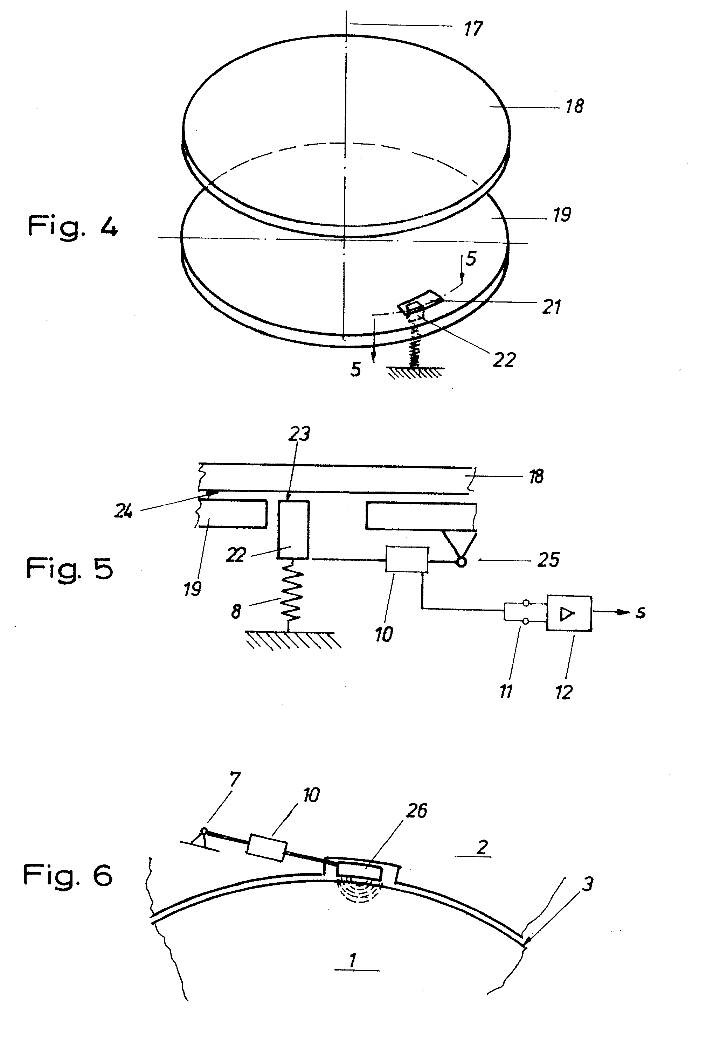

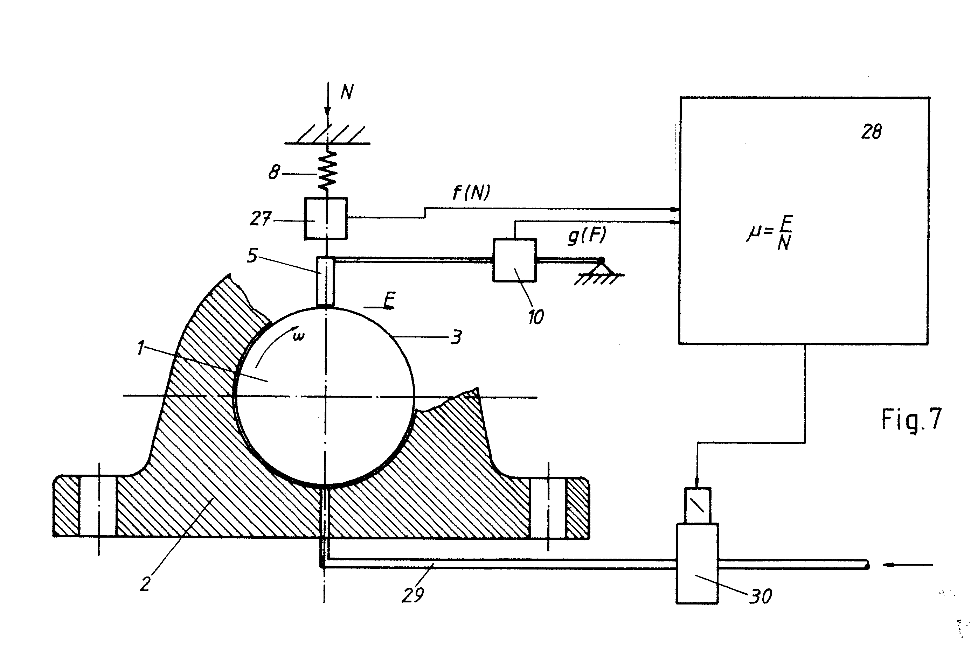

Die Erfindung samt ihren weiteren Vorteilen und Merkmalen
ist im folgenden an Hand beispielsweiser Ausführungsformen
näher erläutert, die in der Zeichnung veranschaulicht sind.
In dieser zeigen Fig. 1 einen schematischen Schnitt durch
ein einen rotierenden Zapfen aufweisendes Gleitlager mit
der erfindungsgemäßen Anordnung, Fig. 2 gleichfalls
schematisch eine schaubildliche Darstellung dieses Lagers,
Fig. 3 in schematischer Darstellung eine Anordnung nach
der Erfindung mit einem federbelasteten Schalter als Sensor,
Fig. 4 schematisch und schaubildlich ein Scheibengleitlager
mit einer Anordnung nach der Erfindung, Fig. 5 einen vergrößerten, schematischen Schnitt nach der Linie V-V der
Fig. 4, Fig. 6 in schematischer Darstellung ein weiteres
Ausführungsbeispiel der Erfindung und Fig. 7 ein Ausführungsbeispiel, bei welchem auch die Anpreßkraft des Meßstückes
ermittelt wird.

Gemäß Fig. 1 und 2 ist ein Zapfen 1 in einem feststehenden Lagerteil 2 eingelagert. Hiebei kann der Lagerteil 2 in bekannter Weise mit nicht näher gezeigten Lagerschalen versehen sein. Ebenso sind Kanäle und Öffnungen für die Zufuhr eines Schmiermittels vorgesehen, welches den Reibwert zwischen den einander zugewandten Lagerflächen 3 bzw. 4 des Zapfens 1 bzw. des feststehenden Lagerteils 2 verringern soll.

In dem feststehenden Lagerteil 2 ist ein bolzenartiges, mit seiner Längsachse radial ausgerichtetes Meßstück 5 vorgesehen, das mittels einer Stange 6 an einer zur Achse des Zapfens 1 im wesentlichen parallelen Achse 7 gelagert ist. Das Meßstück 5 ist mittels einer Druckfeder 8 radial belastet, sodaß seine Stirnfläche gegen die Lagerfläche 4 gedrückt ist. Die Stirnfläche 9 des Meßstückes 5 besteht mit Vorteil aus dem gleichen Material, aus dem die Lagerfläche 4 des feststehenden Lagerteils 2 hergestellt ist.

Die Stange 6 ist nicht durchgehend ausgebildet, sondern es ist ein Kraftsensor 10 eingefügt, der z.B. auf der Basis eines bekannten Dehnmeßstreifens aufgebaut ist. Die elektrischen Anschlüsse 11 des Kraftsensors 10 sind mit dem Eingang eines Verstärkers 12 verbunden, der ein Ausgangssignal s liefert. Bei dem Verstärker 12 kann es sich z.B. um einen Dehnmeßstreifen-Verstärker mit eingebauter Brücke handeln.

Im Betrieb rotiert der Zapfen 1 in der eingezeichneten Drehrichtung A und auf das Meßstück 10 wirkt eine in tangentialer Richtung verlaufende Kraft $F = \mu \cdot N$, worin $\mu$ den Reibwert zwischen Stirnfläche 9 und Lagerfläche 3 und N die Normalkraft, entsprechend der Kraft der Feder 8, bedeuten.

Die Kraft F wird von dem Sensor 10 erfaßt, sodaß der Verstärker 12 ein Ausgangssignal s abgibt, daß dem momentanen Reibwert μ proportional ist. Das Ausgangssignal s ist somit für den Schmierzustand des Lagers repräsentativ und es kann dazu herangezogen werden, die Schmiermittelzufuhr auszulösen oder zu erhöhen, falls der Reibwert μ einen gewissen Grenzwert übersteigt. Auch kann die Maschine, welcher das Lager zugehört, abgestellt werden, falls trotz weiterer Schmierung der Reibwert μ weiter ansteigt.

In Fig. 3 ist gezeigt, daß der Kraftsensor 10 nicht zwingend zur Abgabe eines stetigen Signales eingerichtet sein muß, sondern bloß ein JA-NEIN-Signal abgeben kann. In die Stange 6 ist eine Druckfeder 13 eingefügt; die beiden Stangenteile sind in einer Führung 14 gehalten. Von den Stangenteilen sind Arme 15, 16 zu einem Mikroschalter 17 geführt.

Im Betrieb wird die Feder 13 entsprechend der Kraft $F = μ \cdot N$ mehr oder weniger zusammengedrückt. Überschreitet der Reibwert μ und damit die Kraft F einen bestimmten Wert, so wird der Mikroschalter 17 ausgelöst, sodaß über den Schalter in gleicher Weise wie oben beschrieben eine weitere Schmierung ausgelöst werden kann. Der Schalter 17 kann aber auch zur Auslösung eines Alarmsignales oder zur Notabstellung der Maschine herangezogen werden.

Die Fig. 4 und 5 illustrieren den Einsatz der Erfindung an einem Scheibengleitlager. Derartige Lager werden beispielsweise zur Abstützung des drehbaren, ein Werkzeug tragenden Oberteils von Bergbaumaschinen verwendet, wobei der scheibenförmige obere Lagerteil 18 auf dem gleichfalls scheibenförmigen unteren Lagerteil 19 aufliegt. Der untere Lagerteil 19 ist feststehend, der obere Lagerteil 18 kann um die Achse 20 der Scheiben rotieren.

In dem unteren Lagerteil 19 ist eine Ausnehmung 21 vorgesehen, durch die, dies ist in Fig. 5 näher gezeigt, ein Meßstück 22 geführt ist. Wie bei den vorhin beschriebenen Ausführungsformen ist das Meßstück 22 mit seiner Stirnfläche 23 unter der Kraft einer Feder 8 gegen die Lagerfläche 24 des oberen Lagerteiles 18 gedrückt und mittels einer mit einem Kraftsensor 10 versehenen Stange 6 in einer Achse 25 gelagert, die bezüglich der scheibenförmigen Lagerteile 18, 19 im wesentlichen radial verläuft. Der Kraftsensor 10 kann einen Dehnmeßstreifen aufweisen und wie nach Fig. 2 an einen Verstärker 12 angeschlossen sein, der ein für die Lagerreibung charakteristisches Ausgangssignal s liefert.

In Fig. 6 ist eine Ausführungsform der Erfindung gezeigt, bei welcher die Feder 8 entfallen kann, da das Meßstück 26 als Permanentmagnet ausgeführt ist, der auf Grund der magnetischen Anziehungskraft gegen die Lagerfläche 3 eines rotierenden Zapfens 1 gepreßt ist. Es versteht sich, daß in diesem Fall zumindest die Lagerfläche des Zapfens 1 aus ferromagnetischem Material bestehen muß. Im übrigen gleicht die Anordnung jener nach Fig. 1 und 2.

Bei der Ausführungsform nach Fig. 7 ist zwischen der Feder 8, welche die Normalkraft N erzeugt, und dem Meßstück 5 ein zweiter Kraftsensor 27 angeordnet. Auf diese Weise wird nicht nur, wie bei den vorhin beschriebenen Ausführungen, die Tangentialkraft F sondern auch die Normalkraft N erfaßt, sodaß sich aus den Ausgangssignalen der beiden Sensoren, die sich in allgemeinster Form als $f(N)$ und $g(F)$ angeben lassen, wegen $\mu = F/N$ der momentane Reibwert ermitteln läßt.

Die Ermittlung der Normalkraft N ist dann zweckmäßig, wenn sich die Andruckkraft des Meßstückes gegen die Lagerfläche während des Betriebes ändert. Dies kann z.B. bei Federbelastung der Fall sein, wenn während des Meßvorganges der Abstand zwischen der Lagerfläche 3 und der Lagerung der Feder 8 bzw. des Meßstückes 5 nicht konstant bleibt. Beispielsweise kann bei linearen Lagern eine unebene Oberfläche zu Änderungen der Normalkraft führen. Aber auch langfristige Änderungen, z.B. temperaturbedingte, der Andruckkraft werden auf diese Weise erfaßt.

Wie in Fig. 7 weiters dargestellt, sind die Ausgangssignale f(N) und g(F) der beiden Kraftsensoren 27, 10 mit den Eingängen einer Rechenschaltung 28 verbunden. Unter Rechenschaltung ist hier eine Schaltung zu verstehen, die aus den Ausgangssignalen f(N) und g(F) den Quotienten $\mu = \frac{F}{N}$ ermittelt. Bei Vorliegen linearer Ausgangssignale $f(N) = k_1 \cdot N$ und $g(F) = k_2 \cdot F$ kann diese Rechenschaltung als einfache Dividierschaltung ausgebildet sein.

Weiters ist Fig. 7 entnehmbar, daß das Schmiermittel dem Lager über eine Schmiermittelleitung 29 zugeführt ist, in die ein elektromechanisch betätigtes Ventil 30, z.B. ein Magnetventil, geschaltet ist. Dieses Ventil 30 ist von der Rechenschaltung 28 gesteuert. Auf diese Weise ist es möglich, bei Ansteigen des jeweils ermittelten Reibwertes die Schmiermittelzugabe zu erhöhen, indem das Ventil 30 geöffnet bzw. mehr geöffnet wird, soferne der Reibwert ansteigt. Diese Art der reibwertabhängigen Schmiermittelzugabe läßt sich in analoger Weise bei den Ausführungen der Erfindung anwenden, bei denen nur ein einziger Sensor 10 zur Ermittlung der Kraft F vorgesehen ist. So könnte z.B. bei der Ausführung nach Fig. 3 ein Magnetventil für den Schmiermittelzufluß direkt von dem Schalter 17 gesteuert sein.

Es sei an dieser Stelle erwähnt, daß die Anpreßkraft für das Meßstück auf verschiedene Weise aufgebracht werden kann, beispielsweise auch pneumatisch, durch das Eigengewicht des Meßstückes oder mittels einer Torsionsfeder. Ebenso kann die Normalkraft auf das Meßstück unter Zuhilfenahme von Permanent- oder Elektromagneten aufgebracht werden, ohne daß die Lagerflächen ferromagnetisch sein müssen.

Die Anwendung der Erfindung ist nicht auf Lager mit einem rotierenden Lagerteil beschränkt, sie ist ebensogut bei Gleitlagern mit linearer Bewegung, etwa bei Führungen von Werkzeugmaschinen,anwendbar. Ebenso können selbstschmierende Lager Anwendungspunkt der Erfindung sein, wobei in diesem Fall das Ausgangssignal des Sensors bloß zur Anzeige des verschlechterten Lagerzustandes bzw. zur Abstellung der Maschine herangezogen werden kann.

Patentansprüche

1. Anordnung zur Überwachung des Schmierzustandes eines Gleitlagers mit zwei relativ zueinander bewegbaren Lagerteilen, die einander zugewandte Lagerflächen aufweisen, dadurch gekennzeichnet, daß in dem zu schmierenden Bereich des Lagers einem Lagerteil (2; 19) ein Meßstück (5; 22; 26) zugeordnet ist, das, z.B. mittels einer Feder (8), mit einer vorbestimmten Kraft gegen die Lagerfläche (4; 24) des anderen Lagerteiles (1; 18) gedrückt ist, und daß zur Erfassung der auf das Meßstück (5; 22; 26) in Bewegungsrichtung der Lagerteile (1, 2; 18, 19) ausgeübten Kraft ein Kraftsensor (19), z.B. ein Dehnmeßstreifen, mit dem Meßstück (5; 22; 26) verbunden ist.

2. Anordnung nach Anspruch 1, dadurch gekennzeichnet, daß die gegen die Lagerfläche (3, 24) gedrückte Stirnfläche (9; 23) des Meßstückes (5; 22; 26) aus dem gleichen Material besteht, wie die Lagerfläche (4) jenes Lagerteiles (2; 19) dem das Meßstück (5, 22, 26) zugeordnet ist.

3. Anordnung nach Anspruch 1 oder 2 für ein Gleitlager, bei welchem zumindest jene Lagerfläche gegen die das Meßstück gedrückt wird, aus ferromagnetischem Material besteht, dadurch gekennzeichnet, daß das Meßstück (26) permanet magnetisiert oder mit einem Magnet versehen ist, wobei es zufolge der magnetischen Anziehungskraft gegen die Lagerfläche (3) gedrückt ist.

0187134

4. Anordnung nach einem der Ansprüche 1 bis 3, dadurch gekennzeichnet, daß der Kraftsensor (10) einen mit einer Feder (13) belasteten elektrischen Kontakt (17) aufweist, der bei einer bestimmten, auf das Meßstück (5) in Bewegungsrichtung der Lagerteile ausgeübten Kraft öffnet bzw. schließt (Fig. 3).

5. Anordnung nach einem der Ansprüche 1 bis 4, dadurch gekennzeichnet, daß zur Erfassung der vorbestimmten Kraft, z.B. der Federkraft, ein zweiter Kraftsensor (27) mit dem Meßstück (5) verbunden ist (Fig. 7).

6. Anordnung nach Anspruch 5, dadurch gekennzeichnet, daß zur Ermittlung des Quotienten F/N eine Rechenschaltung (28) vorgesehen ist, deren beiden Eingänge mit den Ausgängen der beiden Kraftsensoren (10, 27) verbunden sind (Fig. 7).

7. Anordnung nach einem der Ansprüche 1 bis 4 oder Anspruch 6, dadurch gekennzeichnet, daß in eine Schmiermittelzuleitung (29) für das Lager ein von dem Signal des Sensors (10) oder von den in der Rechenschaltung (28) verarbeiteten Signalen der Sensoren (10, 27) gesteuertes Magnetventil (30) od. dgl. geschaltet ist (Fig. 7).

P 5164

0187134

Fig. 1

Fig. 2

Fig. 3

P 5164

0187134

Fig. 4

Fig. 5

Fig. 6

Fig.7

0187134